Europäisches Patentamt

(19) European Patent Office

Office européen des brevets

(11) Numéro de publication: **0 125 990**
**B1**

(12) **FASCICULE DE BREVET EUROPEEN**

(45) Date de publication du fascicule du brevet:
**28.10.87**

(21) Numéro de dépôt: **84400937.3**

(22) Date de dépôt: **09.05.84**

(51) Int. Cl.⁴: **H 04 N 9/09,** H 04 N 9/28

(54) Procédé et dispositif de correction de niveau pour une image de télévision.

(30) Priorité: **11.05.83 FR 8307905**

(43) Date de publication de la demande:
**21.11.84 Bulletin 84/47**

(45) Mention de la délivrance du brevet:
**28.10.87 Bulletin 87/44**

(84) Etats contractants désignés:
**DE GB**

(56) Documents cités:
**FR - A - 2 403 703**
**FR - A - 2 498 858**
**GB - A - 2 007 934**
**GB - A - 2 101 459**

(73) Titulaire: **THOMSON-CSF, 173, Boulevard Haussmann,
F-75379 Paris Cédex 08 (FR)**

(72) Inventeur: **Labb, Georges, THOMSON-CSF SCPI 173, bld
Haussmann, F-75379 Paris Cedex 08 (FR)**

(74) Mandataire: **Courtellemont, Alain et al, THOMSON-CSF
SCPI 19, avenue de Messine, F-75008 Paris (FR)**

## Description

La présente invention a pour but d'effectuer une correction de niveau dans un signal à vidéofréquence de télévision, de manière à corriger les défauts de niveau dans l'image de télévision, de manière à corriger les défauts de niveau dans l'image de télévision, tels que par exemple les taches et le taux de modulation de lumière.

Les défauts de niveau dans une image de télévision proviennent, en particulier, du système optique de prise de vues, de l'analyseur d'image et du tube de réception. Mais ces défauts de niveau peuvent également être introduits par les dispositifs de correction de convergence (registration of colour dans la littérature anglo-saxonne) et de géométrie.

Il est connu de corriger les défauts de niveau par un dispositif de correction en croix, à base de signaux analogiques simples (dent de scie, parabole) à fréquence ligne et à fréquence trame; l'efficacité d'une telle correction n'est vraiment assurée que sur la faible partie de l'image par rapport à laquelle ont été déterminés les signaux de correction et qui est généralement constituée par une croix + dont l'intersection est placée au centre de l'image.

Il est également connu de corriger les défauts de niveau par un dispositif de correction par points, où l'image de télévision est divisée, grâce à un quadrillage à pas constant, en un certain nombre de points de correction: par exemple quadrillage en sept zones égales dans le sens vertical et dans le sens horizontal, qui détermine 49 points de correction, ou quadrillage de 14 par 13, déterminant 182 points de correction. L'expérience montre que ces dispositifs, eux non plus, ne permettent pas d'éliminer de façon satisfaisante les défauts de niveau de l'image de télévision.

La présente invention a pour but, en particulier, de permettre une meilleure correction des défauts de niveau, dans une image de télévision, qu'avec les dispositifs réalisés jusqu'alors.

Ceci est principalement obtenu grâce à un dispositif de correction par points de correction, où la largeur et la hauteur des points de correction ne sont pas toutes identiques et résultent d'un quadrillage de l'image à pas constant, adapté aux corrections à effectuer.

Selon l'invention le procédé de correction de défauts de niveau pour une image de télévision, dans lequel l'image est divisée en un nombre prédéterminé de points de correction par un quadrillage en bandes verticales et horizontales, est caractérisé en ce que le quadrillage présente un pas variable et en ce que la longueur du pas du quadrillage est plus petite vers les bords de l'image qu'au voisinage du centre de l'image.

La présente invention sera mieux comprise et d'autres caractéristiques apparaîtont à l'aide de la description ci-après et des figures s'y rapportant qui représentent:

la fig. 1, un quadrillage de l'image de télévision selon l'invention,

la fig. 2, un ensemble de correction d'un dispositif selon l'invention,

la fig. 3, un ensemble pour l'acquisition des signaux de correction, dans un dispositif selon l'invention,

la fig. 4, un schéma plus détaillé d'un élément de la figure 3,

la fig. 5, un mot de huit bits, utilisé dans l'invention,

la fig. 6, une partie plus détaillée de l'ensemble de correction selon la figure 2.

Différentes observations faite en laboratoire, par l'inventeur, sont à la base de l'invention; elles concernent la localisation des défauts de niveau dans l'image de télévision et les raies du spectre de variation des défauts de niveau.

L'observation des défauts de niveau montre que ceux-ci sont particulièrement importants et à variation rapide sur les bords de l'image. Pour y remédier un dispositif de correction par points, où les points de correction seraient obtenus par un quadrillage à pas très serré, conviendrait; mais un tel dispositif nécessiterait, pour la conservation des signaux de correction relatifs aux points de correction, une mémoire de taille très importante, donc trop chère, trop volumineuse et consommant trop d'énergie; de plus un tel dispositif effectuerait, dans la zone centrale de l'image, des corrections d'une finesse superflue. L'utilisation d'un pas variable, devenant plus fin lorsque la distance du point de correction au centre de l'image augmente, va permettre d'éviter ces inconvénients.

Il a également été observé que, après des corrections de convergence et/ou de géométrie effectuées au moyen d'un nombre donné de points de correction, il apparaissait des défauts de niveau très localisés qui ne pouvaient être corrigés au moyen d'un dispositif de correction de niveau dont les signaux de correction étaient déterminés pour les mêmes points de correction. En effet le spectre des variations de niveau ainsi produites présente une raie gênante de par son énergie et cette raie est à la fréquence correspondant à la fréquence des pas qui déterminent les points de correction dans l'image de télévision; pour effectuer une correction de niveau relative à ces défauts très localisés, il faut donc un pas au moins égal au double du pas utilisé pour définir les points de correction de convergence et/ou de géométrie. D'une façon générale la fréquence correspondant au pas de correction de niveau sera choisie au moins égale au double de la fréquence la plus élevée parmi les raies gênantes du spectre des variations du niveau.

La description qui suit se rapporte à un dispositif de correction de niveau destiné à un analyseur de télévision pour une télévision à 625 lignes par image et deux trames entrelacées par image, avec une durée nominale de ligne de 64 µS dont 12 µS de suppression ligne, des trames de 312,5 lignes et une suppression trame d'une durée de 25 lignes. Ce dispositif est destiné à corriger des défauts de niveau entraînés, en particulier, par des corrections de convergence et/ou de géométrie au moyen de points de correction de l'image déterminés par un quadrillage de l'image qui peut être de plus de 20 pas dans le sens horizontal et dans le sens vertical; les dispositifs de correction de convergence et de géométrie actuels étant basés sur un quadrillage à moins de 20 pas dans le sens horizontal et le sens vertical, les défauts de niveau qu'ils entraînent peuvent donc être corrigés par le dispositif décrit.

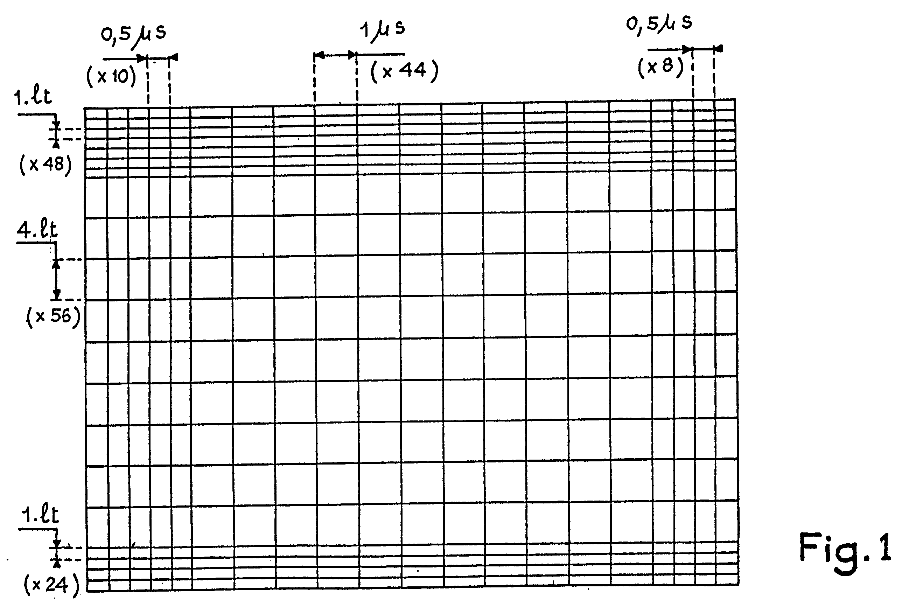

La figure 1 montre, de manière simplifiée, le quadrillage de l'image de télévision qui détermine les points de correction de niveau. Dans l'exemple décrit, l'image a été quadrillée par un découpage vertical en 62 bandes (10 bandes de 0,5 µS, 44 bandes de 1 µS et 8 bandes de 0,5 µS) et un découpage horizontal en 128 bandes (48 bandes d'une ligne de trame, lt, 56 bandes de 4 lignes de trame et 24 bandes d'une ligne de trame; une ligne de trame, lt, correspond sensiblement à un trois centième de la hauteur de l'image de télévision). Au total c'est donc une correction à l'aide de 62 × 128 = 7936 points de correction de niveau qui est effectuée. Dans un souci de simplification et de clarté du dessin, le nombre de bandes horizontales et de bandes verticales a été nettement réduit sur la figure 1 qui fait néanmoins bien ressortir que le pas du quadrillage, et donc de la correction de niveau, est plus serré dans les parties de l'image les plus éloignées du centre de l'image que dans les parties de l'image proches de ce centre. Sur la figure 1 les nombres effectifs de pas ont été indiqués, c'est ainsi que, si les 44 bandes verticales de 1 µS ont été réduites à 11 sur cette figure, par contre il a été indiqué entre parenthèses que le nombre effectif est de 44.

Pour effectuer une correction de niveau du signal vidéofréquence d'un analyseur de télévision couleur, il est classique, et c'est la méthode employée dans la réalisation décrite ici, de déterminer les signaux de correction de chaque couleur primaire pour la tache noire et pour la tache blanche utilisées comme vues de référence. La tache noire est obtenue par obturation de l'objectif de la caméra de prise de vues et la tache blanche par l'interposition, devant l'objectif de la caméra, d'un écran blanc. Les signaux de correction ainsi obtenus sont additionnés au signal à vidéofréquence pour ceux élaborés à partir de la tache noire et multipliés au signal à vidéofréquence pour ceux élaborés à partir de la tache blanche et il y a donc six ensembles de correction dans le dispositif de correction de niveau, c'est-à-dire deux par couleur primaire: un pour le niveau du noir et un pour le niveau du blanc.

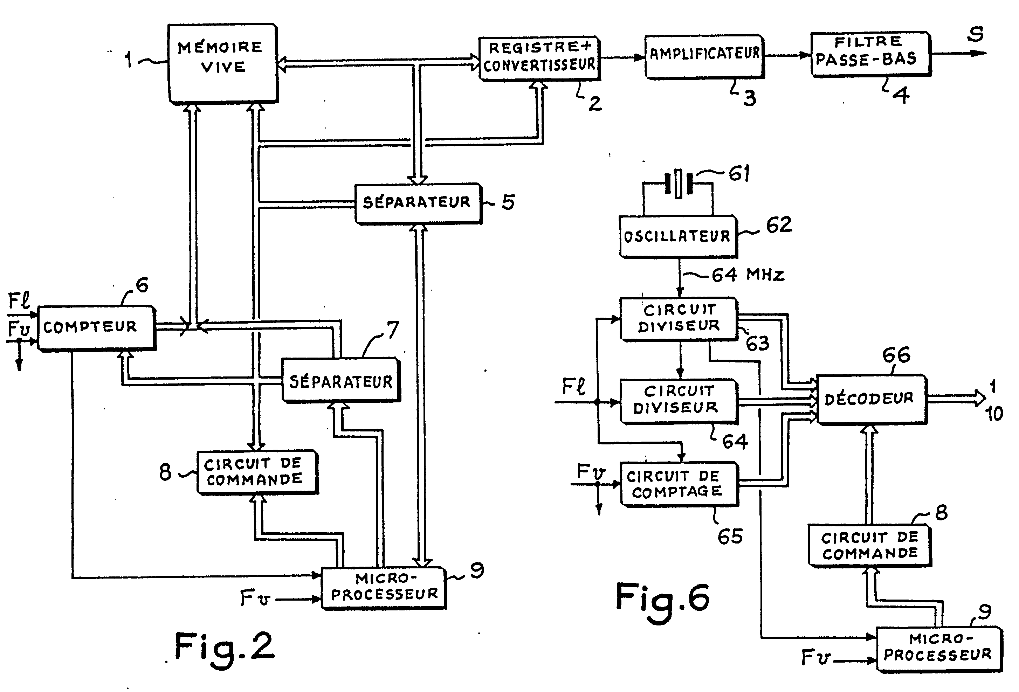

La figure 2 montre un de ces six ensembles de correction de niveau, composé des circuits 1 à 5; les cinq autres ensembles lui étant semblables n'ont pas été représentés. Cet ensemble de correction fonctionne en liaison avec les circuits 6 à 9 de la figure 2, qui servent également au fonctionnement des cinq autres ensembles de correction de niveau.

La figure 2 montre une mémoire vive, 1 (RAM dans la littérature anglo-saxonne) d'une capacité de 8K×8 ou, plus exactement, de 8192 mots de 8 bits ou octets, qui sert à garder en mémoire les 7936 signaux de correction de niveau qui, pour la couleur primaire et le niveau de noir ou de blanc que corrige l'ensemble considéré, sont relatifs aux 7936 points de correction mentionnés lors de la description de la figure 1. Les octets contenus dans la mémoire 1 sont envoyés dans un registre 2 muni d'un convertisseur numérique-analogique de sortie, puis sont amplifiés dans un amplificateur opérationnel, 3, à large bande. Un filtre passe-bas, 4, branché à la sortie de l'amplificateur 4 fournit le signal S de correction.

Un étage séparateur, 5 (buffer dans la littérature anglo-saxonne) formé d'amplificateurs bidirectionnels assure les échanges d'informations entre la mémoire vive 1 et un microprocesseur 9.

Un étage séparateur 7 permet d'adresser la mémoire 1 par le microprocesseur 9 à l'aide d'un circuit de commande et de mémorisation 8 qui est le circuit d'aiguillage et de sélection, avec mémorisation éventuelle, commandé par le microprocesseur 9.

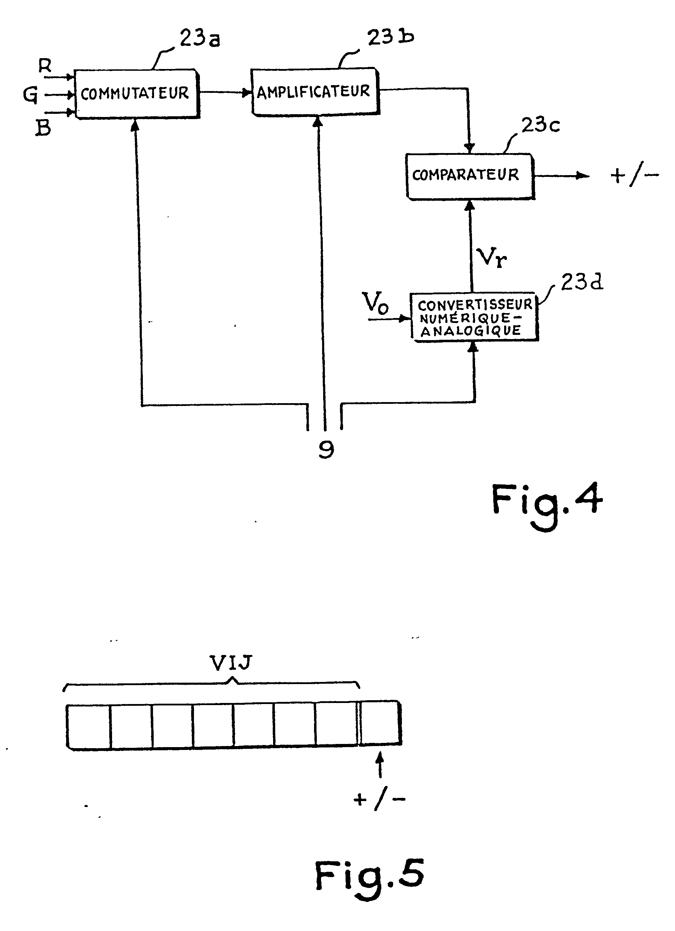

Un compteur 6, dont un exemple de réalisation est donné à la figure 5, reçoit des signaux de synchronisation à la fréquence ligne Fl et à la fréquence trame Fv utilisés dans la caméra de télévision; ce compteur décrit l'image et adresse, à l'allure du pas variable (figure 1), la mémoire de correction, 1, dont l'octet adressé est converti en un signal analogique (circuit 2) pour, après amplification puis filtrage, être combiné comme signal de correction, avec le signal à vidéofréquence; cette combinaison du signal à vidéofréquence avec son signal de correction, S, se fait grâce à un circuit multiplicateur ou à un circuit additionneur, non représentés, selon que la mémoire 10 et donc le signal S sont relatifs à une correction du niveau du blanc ou du noir.

Les valeurs contenues dans la mémoire 1 sont sauvegardées par une batterie d'accumulateurs, non représentée. lorsque l'alimentation de la caméra de télévision est coupée.

La mémoire 1 comporte 8 192-7 936 = 256 octets qui ne servent pas pour la correction du signal à vidéofréquence. Une partie de ces octets est utilisée pour tester la mémoire 1 lors, par exemple, d'une remise sous tension de la caméra; pour cela ils sont lus et comparés à un message conservé dans le progiciel (package dans la littérature anglo-saxonne), par exemple THOMSON-CSF-TELEVISISON; un test du type contrôle de parité sur les valeurs contenues dans la mémoire 1, est également possible à l'aide de ces octets laissés libres par les signaux de correction.

Si les tests ainsi effectués ne sont pas concluants, c'est-à-dire si le contenu de la mémoire 1 n'a pas été sauvegardé, un réglage du contenu de la mémoire 1 est à effectuer, ceci est réalisé lors d'un fonctionnement en acquisition.

L'ensemble de correction selon la figure 2 correspond donc à un ensemble de correction de niveau classique mais où les points de correction sont déterminés non par un quadrillage de l'image à pas constant mais par un quadrillage de l'image à pas variable. Il en résulte un adressage différent des données de correction en fonction du balayage de l'image; il est à noter de plus que le compteur 6 présente certaines particularités intéressantes et est décrit plus en détail à l'aide de la figure 6.

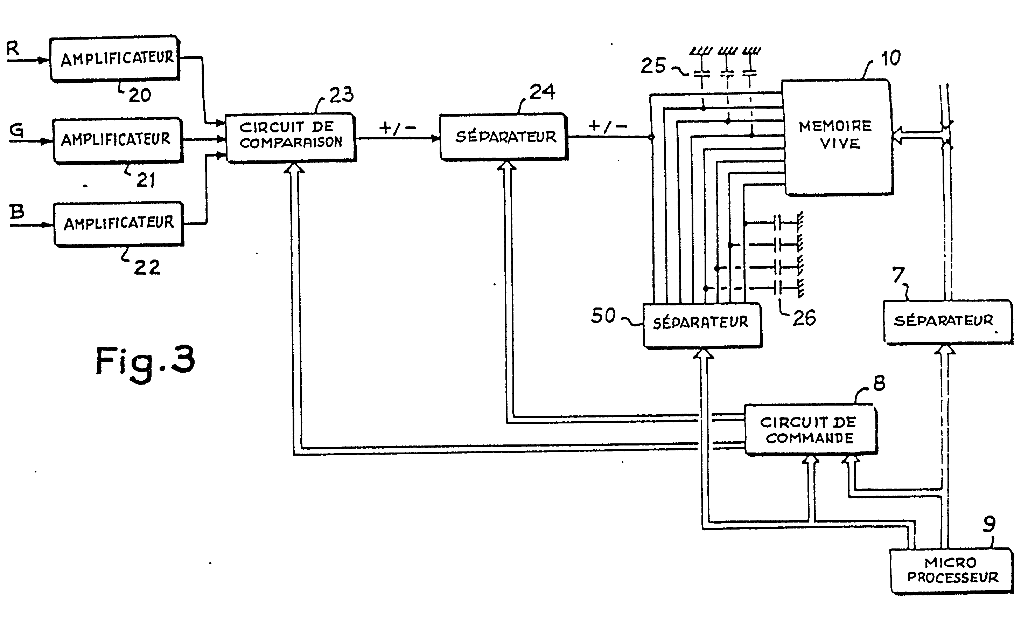

L'acquisition des données de correction s'effectue à l'aide de l'ensemble de circuits représentés sur la figure 3. Les signaux à vidéofréquence, corrigés en fonction du contenu des six mémoires telles que 1 (figure 2) et correspondant aux trois couleurs primaires (rouge, R, vert, G, et bleu, B), sont amplifiés respectivement par trois amplificateurs 20, 21, 22; il s'agit donc ici d'un fonctionnement en boucle puisque ce sont les signaux corrigés en fonction du contenu des mémoires telles que 1 qui sont pris en compte dans le processus d'acquisition pour faire évoluer le contenu de ces mémoires selon le programme qui sera indiqué plus loin. Un circuit de comparaison 23, comportant un sélecteur d'entrée commandé par le circuit de commande 8, sélectionne l'un des trois signaux à vidéofréquence R, G, B. Le circuit de comparaison 23 effectue une comparaison entre le signal vidéofréquence sélectionné et un signal de référence qui, dans l'exemple décrit, est le signal à vidéofréquence, après correction, dans la zone centrale de l'image mais qui peut être une tension de référence prédéterminée. Les résultats apparaissent sous la forme d'une information notée +/– sur la figure 3. L'information +/– est le résultat d'une comparaison de la tension à vidéofréquence avec la tension de référence; elle a la valeur 1 logique quand la tension à vidéofréquence est supérieure à la tension de référence et la valeur 0 logique dans le cas contraire.

La figure 4 montre comment est réalisé le circuit de comparaison 23 de la figure 3. Un commutateur, 23a, permet, sous la commande du microprocesseur 9, de sélectionner un des trois signaux à vidéofréquence R, G, B, amplifié. Le signal sélectionné est appliqué à l'entrée d'un amplificateur à deux gains, commutables sous la commande du microprocesseur 9: gain égal à 1 pour la correction d'un signal vidéo blanc et gain égal à 6 pour la correction d'un signal vidéo noir. Le signal de sortie de l'amplification 23b est appliqué sur la première entrée d'un comparateur 23c qui reçoit sur sa seconde entrée une tension de référence Vr fournie par un convertisseur numérique-analogique 23d. La tension de référence du convertisseur numérique-analogique est une tension fixe Vo et son signal d'entrée est fourni par le microprocesseur de la manière indiquée dans la suite de cette description.

L'information +/– est envoyée, à travers un séparateur 24, commandé par le circuit 8, dans une mémoire vive 10, qui constitue la mémoire d'acquisition du dispositif de correction de niveau; cette mémoire est identique à la mémoire 1 de la figure 2. L'octet de rang I, J, de la mémoire 10, dans lequel doit être placée l'information fournie par le circuit 23 à un instant donné, est représenté schématiquement sur la figure 5. L'information de comparaison, fournie par le circuit 23, est placée en position zéro dans l'octet. Pour cela l'accès de la mémoire 10 permettant cette entrée d'information est relié au séparateur 24 tandis que, sur les 8–1 = 7 autres accès, sont branché sept condensateurs, 25, 26; la mémoire 10, par ses séparateurs de données de sortie en lecture, charge les sept condensateurs de manière à conserver l'information pour la récrire, avec l'information venant du circuit 24, environ 100 nanosecondes plus tard.

Les positions 1 à 7 de l'octet selon la figure 5 sont indiquées VIJ; elles sont remplies, en fonction des comparaisons successives effectuées dans le circuit 23, comme indiqué dans le programme décrit plus loin.

L'acquisition des données de correction s'effectue au rythme de la télévision grâce au compteur 6.

Le microprocesseur 9 (figures 2 et 3) a pour but de déclencher un processus d'acquisition d'information, de prélever les informations dans la mémoire 10 (figure 3) et, suivant le programme, de les acheminer par étapes successives dans la mémoire 1 (figure 2) de la correction à élaborer. Il s'agit dans ce processus de déterminer les signaux de correction de chaque couleur primaire pour la tache noire et pour la tache blanche.

Dans une première étape le microprocesseur 9 règle le circuit de comparaison 23 par le convertisseur numérique-analogique d'entrée, 23d, de ce circuit, en fonction de la tension de référence prédéterminée dont il a déjà été question ci-avant, pour obtenir comme tension de référence finale la tension vidéo d'une zone centrale de l'image; pour cela les corrections sont envoyées sur le convertisseur numérique d'entrée du circuit de comparaison 23.

Dans une deuxième étape il est possible, en partant du point de correction au centre de l'image et en conservant la tension de référence finale de la première étape, d'effectuer un réglage dit «en croix» c'est-à-dire de déterminer une valeur de correction pour les points de correction définis à pas variable et placés sur la même horizontale, d'une part, et sur la même verticale, d'autre part, que le point de correction de départ. Le microprocesseur 9 calcule ensuite les autres points en faisant pour chaque point, une moyenne sur les valeurs de correction des deux points de la croix situés respectivement sur la même verticale et sur la même horizontale que le point considéré.

Eventuellement une troisième étape est possible en complétant le traitement par les valeurs acquises sur les bords de l'image et une quatrième étape est possible en complétant par le traitement de toutes les valeurs acquises et, dans une cinquième étape, le microprocesseur peut effectuer, pour chaque point de correction, un filtrage spatial du signal de correction en fonction des signaux de correction de 4, 8, ou plus, point de correction environnants; ceci permet d'éviter des sautes inégales ou trop aléatoires de la correction qui résultent, par exemple, d'un marquage de l'analyseur d'image (défaut ponctuel du tube).

Le programme donné plus loin montre que la première étape du processus d'acquisition (point au centre de l'image) est réalisée en prenant:

$$L0 = LN = \frac{SIZEVT}{2} \quad (SIZEVT: \text{taille verticale})$$

$$K0 = KN = \frac{SIZEHO}{2} \quad (SIZEHO: \text{taille horizontale})$$

En considérant dans ce même programme

$$L0 = \frac{SIZEVT}{2} - a \quad (\text{avec } a = 1 \text{ ou } 2 \text{ ou } 3\ldots)$$

$$LN = \frac{SIZEVT}{2} + a$$

$$K0 = \frac{SIZEHO}{2} - b \quad (\text{avec } b = 1 \text{ ou } 2 \text{ ou } 3\ldots)$$

$$KN = \frac{SIZEHO}{2} + b$$

le traitement est effectué sur une petite zone centrale de l'image.

La figure 6 montre comment est réalisé le compteur 6 de la figure 1 qui fournit les adresses des six mémoires telles que 1 (figure 2) et de la mémoire 10 (figure 3). Un oscillateur, 62, piloté par un quartz, 61, d'une stabilité de $10^{-4}$, fournit un signal de sortie à 64 MHz. L'originalité du compteur 6, pour un tel type de matériel, est que le quartz 61 fonctionne «en libre» c'est-à-dire sans être asservi dans l'oscillateur 62. Ce fonctionnement «en libre» introduit une instabilité (jitter dans la littérature anglosaxonne) d'une période, soit 16 nanosecondes, ce qui, dans l'application considérée n'est pas une gêne et rend non stationnaires certains couplages parasites créés lors de la commutation des signaux. Un premier circuit diviseur, 63, de rapport de division égal à 16 fournit des signaux à 4 MHz dont l'un est envoyé au microprocesseur 9, qui reçoit également les impulsions à fréquence de trame Fv, pour déterminer un fonctionnement synchrone du microprocesseur. Le circuit diviseur 63 est suivi d'un second circuit diviseur, 64, de rapport de division égal à 128; ces deux circuits diviseurs sont remis à zéro par des impulsions à fréquence de ligne, Fl, provenant de l'analyseur, et, en association avec un décodeur programmable 66 commandé par le circuit de commande 8, ils déterminent les instants caractéristiques de la ligne qui divisent la ligne en segments de 0,5 µS et 1 µS selon le pas variable horizontal dont il a été question, en particulier, à l'occasion de la description de la figure 1. Un circuit de comptage 65 formé par un compteur à 12 étages, compte les impulsions à fréquence ligne, Fl, et est remis à zéro par des impulsions à fréquence de trame, Fv, provenant de la caméra; en association avec le décodeur 66, le circuit de comptage 65 détermine les instants caractéristiques qui divisent verticalement l'image en bandes d'une ligne ou de quatre lignes selon le pas variables vertical dont il a été question, en particulier, à l'occasion de la description de la figure 1. Le décodeur 66 peut ainsi assurer la scrutation temporelle des mémoires 1 et de la mémoire 10 avec un pas variable, c'est-à-dire une durée variable, mais une progression continue dans l'espace d'adressage des mémoires.

La présente invention n'est pas limitée à l'exemple décrit. C'est ainsi, en particulier, qu'elle peut être appliquée à la correction des défauts de niveau engendrés par un tube de réception, de l'image de télévision ou un écran de projection de cette image; dans ce cas, les signaux à vidéofréquence sont modifiés pour tenir compte des défauts qui se produiront, après cette modification, dans l'image restituée.

Le programme de l'acquisition, dont il a été question plus avant, est donné ci-après; il est décrit en langage Pascal et comporte 74 lignes:

```
  LINE  LOC LEV  BE    MOTOROLA PASCAL 2.00 PROCESSING
                         SA 04/06/83 14:03:38

   1(     0)    0)  —   PROGRAM PROCESSING ;
   2(     0)    0)  —
   3(     0)    0)  —   CONST SIZE = 8000 ;
   4(     0)    0)  —         SIZEHO = 62  ;
   5(     0)    0)  —         SIZEVT = 128 ;
   6(     0)    0)  —         MIN    = 0   ;
   7(     0)    0)  —         MAX    = 127 ;
   8(     0)    0)  —   TYPE  LINE = 1..SIZEHO ;
   9(     0)    0)  —         FIELD = 1..SIZEVT ;
  10(     0)    0)  —         FILTER = MIN..MAX ;
  11(     0)    0)  —         BYTE = RECORD
  12(     0)    0)  —                    A : BOOLEAN ;
  13(     0)    0)  —                    B : FILTER ;
  14(     0)    0)  —                    C : BOOLEAN ;
  15(     0)    0)  —                    D : FILTER ;
```

```
16(    0)  0)  —                        END ;
17(    0)  0)  —            RAM 10 = ARRAY [LINE,FIELD]
                            OF BYTE ;
18(    0)  0)  —
19(   -3)  0)        VAR    I,K0,KN : LINE ;
20(  -10)  0)  —            J,L0,LN : FIELD ;
21(  -12)  0)               V       : BOOLEAN ;
22(  -14)  0)  —            VIJ     : FILTER ;
23(  -16)  0)               A       : 1..255 ;
24(  -16)  0)  —
25(    0)  1)        PROCEDURE RESET ; FORWARD ;
26(    0)  1)  —
27(    0)  1)  —     PROCEDURE DECREMENT ;FORWARD ;
28(    0)  1)  —          (* "A" VALUE DECREMENTING FOR
                          CORRECTION MEMORY AT Y LINE
29(    0)  1)  —          AND Z FIELD RANGE.
30(    0)  1)  —          POSSIBLE FORWARD NOTION OF
31(    0)  1)             RESTORED RANGE.*)
32(    0)  1)  —
33(    0)  1)  —     PROCEDURE INCREMENT ; FORWARD ;
34(    0)  1)             (*"A" VALUE INCREMENTING FOR
                          CORRECTION MEMORY AT Y LINE
35     0)  1)  —          AND Z FIELD RANGE.
36(    0)  1)  —          POSSIBLE FORWARD NOTION OF
37     0)  1)  —          RESTORED RANGE.*)
38(    0)  1)  —     PROCEDURE AVERAGE (
39(    0)  1)            VAR X : BOOLEAN ;
40(    0)  1)  —             XI : FILTER ) ;
41(   -1   1)  —         VAR H: BOOLEAN ;
42     1    1)  A—   BEGIN
43     2    1)  —              IF X = FALSE THEN
44         1)  B—       BEGIN
45     3    1)  —              IF XI <> MIN THEN
46     4    1)  —              XI : = XI-1
47         1)  —              ELSE ;
48         1)  —B       END
49         1)  —              ELSE
50     5)   1)  —              IF XI <> MAX THEN
51     6    1)  —              XI := XI+1
52         1)  —              ELSE ;
53     7    1)  —            H := (XI <> MIN) ;
54     8    1)  —            H := (X OR H) ;
55     9    1)  —            IF H    = FALSE THEN
56     10   1)  —              DECREMENT ;
57     11   1)  —            H := (XI = MAX) ;
58     12   1)  —            H :=(X AND H) ;
59     13   1)  —            IF H    = TRUE  THEN
60     14   1)  —            INCREMENT ;
61         1)  -A       END ;
62         1)  —
63         1)  —
***INCREM ASSUMED EXTERNAL
***DECREM ASSUMED EXTERNAL
***RESET ASSUMED EXTERNAL
64     15   0)  A— BEGIN (*PROGRAM*)
65     16   0)  —        RESET ;
66     17   0)  —        FOR J := LO TO LN DO
```

```
67        0)  B—        BEGIN
68   18   0)  —             FOR I := K0 TO KN D0
69        0)  C-        BEGIN
70   19   0)  —             A := 1 ;
71   20   0)  —             AVERAGE (V,VIJ) ;
72        0)  —C        END ;
73        0)  —B END
74        0)  —A END.
```

## Revendications

1. Procédé de correction de défauts de niveau pour une image de télévision, dans lequel l'image est divisée en un nombre prédéterminé de points de correction par un quadrillage en bandes verticales et horizontales, à chaque point de correction étant associée une correction à effectuer sur les signaux de télévision à vidéofréquence relatifs à ce point de correction, caractérisé en ce que le quadrillage présente un pas variable et en ce que la longueur du pas du quadrillage est plus petite vers les bords de l'image qu'au voisinage du centre de l'image.

2. Procédé de correction de défauts de niveau selon la revendication 1, pour la correction de défauts de niveau ayant un spectre de variation qui présente n raies gênantes (n entier positif), caractérisé en ce que, pour chaque zone de l'image, la fréquence correspondant à la longueur du pas de correction en cette zone est au moins égale au double de la fréquence le plus élevée des n raies.

3. Dispositif de correction de défauts de niveau pour une image de télévision, comportant un ensemble de mémorisation (17) pour la mise en mémoire des données des corrections à effectuer sur des signaux de télévision à vidéofréquence, caractérisé en ce qu'il comporte un circuit (6) de scrutation temporelle, à pas variable, de l'ensemble de mémorisation.

4. Dispositif de correction selon la revendication 3, comportant un ensemble d'acquisition pour l'acquisition des données des corrections (10, 20–26, 50), caractérisé en ce que l'ensemble d'acquisition comporte un circuit de comparaison (23) pour, pendant un processus d'acquisition, recevoir un signal à vidéofréquence provenant d'une vue de référence et le comparer avec un signal de référence et fournir des signaux (+/–) représentatifs de l'écart entre le signal à vidéofréquence et le signal de référence, et une mémoire (10) pour la mise en mémoire des signaux fournis par le circuit de comparaison (23).

5. Dispositif de correction selon l'une des revendications 3 et 4, caractérisé en ce que le circuit de scrutation temporelle comporte: un oscillateur à quartz (61, 62), suivi de diviseurs de fréquence (63, 64) remis à zero par des impulsions à fréquence de ligne relatives à l'image de télévision; un circuit de comptage (65) qui compte les impulsions à fréquence de ligne et est remis à zero par des impulsions à fréquence de trame relatives à l'image de télévision; et un décodeur (66) pour recevoir les signaux de sortie des diviseurs de fréquence et du circuit de comptage et fournir des adresses de mise en mémoire.

## Patentansprüche

1. Verfahren zur Korrektur von Niveaufehlern für ein Fernsehbild, wobei das Bild durch ein Netz aus senkrechten und waagrechten Bändern in eine vorgegebene Zahl von Korrekturpunkten aufgeteilt ist und jedem Korrekturpunkt eine Korrektur zugeordnet ist, der die Videofrequenz-Fernsehsignale bezüglich dieses Korrekturpunkts zu unterwerfen sind, dadurch gekennzeichnet, dass das Netz einen variablen Gitterabstand besitzt und dass der Gitterabstand zu den Bildrändern hin kleiner als in der Nähe der Bildmitte ist.

2. Verfahren zur Korrektur von Niveaufehlern nach Anspruch 1 zur Korrektur von Niveaufehlern mit einem Variationsspektrum, das n störende Strahlen besitzt (N ist eine positive ganze Zahl), dadurch gekennzeichnet, dass für jede Bildzone die dem Korrekturgitterabstand in dieser Zone entsprechende Frequenz mindestens gleich dem Doppelten der höchsten Frequenz der n Strahlen ist.

3. Vorrichtung zur Korrektur von Niveaufehlern für ein Fernsehbild, mit einer Speichereinheit (1) zur Speicherung der Daten der Korrekturen, denen die Videofrequenz-Fernsehsignale zu unterwerfen sind, dadurch gekennzeichnet, dass sie einen Kreis (6) zur zeitmultiplexierten Abtastung der Speichereinheit mit variablem Schrittabstand besitzt.

4. Korrekturvorrichtung nach Anspruch 3, mit einer Erfassungseinheit zur Erfassung der Korrekturdaten (10, 20–26, 50), dadurch gekennzeichnet, dass die Erfassungseinheit einen Vergleichskreis (23), der während eines Erfassungsprozesses ein von einem Bezugsbild stammendes Videofrequenzsignal empfängt und es mit einem Bezugssignal vergleicht, sowie Signale (+/–) liefert, die für den Abstand zwischen dem Videofrequenzsignal und dem Bezugssignal repräsentativ sind, und einen Speicher (10) aufweist, um die vom Vergleichskreis (23) gelieferten Signale einzuspeichern.

5. Korrekturvorrichtung nach einem der Ansprüche 3 und 4, dadurch gekennzeichnet, dass der Kreis zur zeitmultiplexierten Abtastung enthält:

– einen Quarzoszillator (61, 62) gefolgt von Frequenzteilern (63, 64), die durch Impulse mit der Zeilenfrequenz bezüglich des Fernsehbildes auf Null gesetzt werden.

– einen Zählkreis (65), der die Impulse mit der Zeilenfrequenz zählt und durch Impulse mit der Rahmenfrequenz bezüglich des Fernsehbildes auf Null gesetzt wird,

– und einen Dekodierer (66), der die Ausgangssignale der Frequenzteiler und des Zählkreises zugeführt erhält und Adressen für die Einspeicherung liefert.

## Claims

1. A method for correcting level faults for a television picture wherein the picture is divided into a predetermined number of correction points by a network of vertical and horizontal bars, to each correction point being associated a correction to be effected on the video frequency TV signals relating to this correction point, characterized in that the network presents a variable pitch and that the length of the network pitch is smaller towards the edge of the picture than close to the center of the picture.

2. A method for correction level faults according to claim 1 for correcting level faults having a variation spectrum with n cumbersome rays (N being a positive integer), characterized in that for each zone of the picture, the frequency corresponding to the length of the correction pitch in this zone is at least equal to twice the highest frequency of the n rays.

3. A device for correcting level faults for a television picture, comprising a storage assembly (1) for storing data of the corrections to be performed in video frequency TV signals, characterized in that it comprises a time division circuit (6) for scrutinizing the storage assembly at a variable pitch.

4. A correction device according to claim 3, including an acquisition assembly for acquiring correction data (10, 20 to 26, 50), characterized in that the acquisition assembly includes a comparator circuit (23) for receiving, during an acquisition processus, a video frequency signal coming from a reference view and for comparing it with a reference signal for supplying signals (+/−) signifying the difference between the video frequency signal and the reference signal, and a memory (10) for storing the signals supplied by the comparator circuit (23).

5. A correction device according to one of claims 3 and 4, characterized in that the time division scrutinizing circuit comprises:

– a quartz oscillator (61, 62) followed by frequency dividers (63, 64) which are reset to zero by pulses having the line frequency and being related to the television picture,

– a counting circuit (65) counting the line frequency pulses and being reset to zero by pulses having a frame frequency relating to the television picture,

– and a decoder (66) for receiving the output signals of the frequency dividers and of the counting circuit and for supplying storage addresses.

Fig. 1

Fig.2

Fig.6

0 125 990

Fig.3

0 125 990

Fig.4

Fig.5